# EUROPEAN PATENT APPLICATION

(11) **EP 4 202 806 A1**
(43) Date of publication of application: **28.06.2023**
(21) Application number: 21858555.2
(22) Date of filing: 17.08.2021
(51) Int. Cl.: G06Q 10/02, G06Q 50/00, G06Q 20/12, G06Q 30/06, G06Q 10/10, G01S 19/01, H04W 4/021, H04W 4/029

(54) **RESERVATION AND PAYMENT SYSTEM USING SNS AND METHOD THEREFOR**

(30) Priority: 18.08.2020 KR 20200103458
(71) Applicant: Picknumber Co., Ltd., Suwon-si, Gyeonggi-do 16229 (KR)
(72) Inventor: PARK, Jee Yeon, Suwon-si, Gyeonggi-do 16517 (KR); PARK, So Yeun, Yongin-si, Gyeonggi-do 16840 (KR); PARK, Byung Hyuk, Seoul 08830 (KR)
(74) Representative: Frenkel, Matthias Alexander
(86) International application number: PCT/KR2021/010874
(87) International publication number: WO 2022/039468

(57) **Abstract**

The present invention relates to a reservation and payment system using SNS and a method therefor, and in particular, when one of a specific text and a specific image displayed while an SNS is used is selected, a reservation page corresponding to the selected one of the specific text and the specific image may be called or a corresponding reservation screen may be displayed by executing a reservation app installed in a terminal, and a reservation function or waiting number provision function may be performed by using personal information pre-stored in the terminal.

## Description

### Technical Field

The present invention relates to a reservation and payment system and method using SNS, and in particular, the reservation and payment system and method using SNS that when one of a specific text and a specific image displayed, while an SNS is used, is selected, a reservation page corresponding to the selected one of the specific text and the specific image is called or the corresponding reservation screen is displayed by executing a reservation application installed in a terminal, and a reservation function or waiting number provision function is performed using personal information pre-stored in the terminal.

### Background Art

With the spread of various types of SNS (Social Network Services) recently, many people are sharing specific interests or activities with strangers, and there is an increase in the number of people who reserve and use the services provided by the companies through additional searches based on information such as performances, cafes, restaurants, accommodations, theme parks, beauty, etc. encountered at these events.

This phenomenon is expanding increasingly with the development of smartphones and SNS and the increase in users.

However, it is inconvenient to search for more information through a separate search from specific information learned from the current SNS and then search again through a reservation application or make a reservation over the phone.

Meanwhile, after making a reservation for the company, it is possible to know whether or not the customer has entered the reserved company through direct confirmation by the person involved in the company. In the case of large-scale events such as concerts and musical performances, it is difficult to check whether the reserved customers have entered the space, which inevitably requires considerable labor and time.

### [Prior art document]

(Patent Document 1) Korea Patent Registration No. 10-1778556 (Title: Restaurant reservation service method and system)

### Disclosure

### Technical Problem

An object of the present is to provide a reservation and payment system and method using SNS that when one of a specific text and a specific image displayed, while an SNS is used, is selected, a reservation page corresponding to the selected one of the specific text and the specific image may be called or the corresponding reservation screen may be displayed by executing a reservation application installed in a terminal, a reservation function or waiting number provision function may be performed using personal information pre-stored in the terminal, and whether the reservation customer has entered the company may be checked and informed through the customer terminal and the short-range wireless sensor network.

### Technical Solution

The reservation and payment system using social network services (SNS) according to an embodiment of the present invention comprises a company terminal associated with a company providing a service related to a specific word or a specific image, a SNS server providing information including the specific word or specific image, a customer server, when a preset specific word or specific image is selected from information displayed on a customer terminal while connected to an SNS account related to the customer terminal, displaying a reservation screen for using a service provided by the company related to the selected specific word or specific image bylinkingtothe SNS server and reservation server, transmitting reservation request information including a plurality of input values corresponding to a plurality of input items included in the reservation screen, personal information related to the user of the customer terminal pre-stored in the customer terminal, and identification information of the customer terminal to the reservation server, displaying the waiting number issuing result transmitted in response to the reservation request information, transmitting positioning information of global positioning system (GPS) of the customer terminal obtained using GPS function, and receiving and displaying a result of whether or not to enter the company from the reservation server, an indoor wireless positioning sensor module being installed in the company's room and when the customer terminal is located in the company's room, forming a short-range wireless sensor network with the customer terminal to transmit indoor positioning information of the customer terminal to the reservation server, andthe reservation server performing a waiting number issuing function based on the current time-based on the reservation request information bylinkingtothe company terminal related to the reservation request information, transmitting the waiting number issuing result to the customer terminal and the company terminal, respectively, transmitting the result by determining whether or not the customer entered the company according to the GPS positioning information and indoor positioning information of the customer terminal to the customer terminal and the company terminal, respectively.

Further, the reservation screen may include information for reserving a service provided by the company related to the specific word or image and includes at least one selection item of information about the company related to the specific word or image, information about business hours, price information and discount information for each provided service, and a reservation date and time.

Further, the reservation request information may include at least one of reservation company information, desired date and time of reservation information, reservation service information, information on the number of people to be reserved, and other request information.

Further, the waiting number issuing result may include waiting number information, remaining order information, and waiting number issuing date and time information issued accordingto the order of issuing waiting numbers from a waiting number issuing device provided in the company andlinkedtothe company terminal, and information about a company related to the company terminal.

Further, the reservation server links to the company terminal and the waiting number issuing device linking with the company terminal and being provided in the company and performs the waiting number issuing function to use the service provided by the company within a preset time from the desired time of reservation included in the reservation request information based on the reservation request information and the real-time waiting number issued by the waiting number issuing device.

Further, the reservation server, when only the GPS positioning information of the customer terminal is received, may determine that the customer terminal has not entered the company and transmit the result of the customer's non-entrance to the company to the customer terminal and the company terminal, respectively, and the reservation server, when the location information including the indoor positioning information of the customer terminal is received, may determine that the customer terminal is in an entrance state to the company and transmit the result of the customer's entrance to the company to the customer terminal and the company terminal, respectively.

Further, the reservation server, when GPS company proximity location information for a proximity range area of a certain radius is set based on the GPS company location information registered for each company terminal, and it is determined that the GPS positioning information of the customer terminal is located in the proximity range area set as the GPS company proximity location information, may transmit a short-range wireless communicationactivation confirmation request signal to the customer terminal, and the reservation server, when a short-range wireless communication deactivation response signal to the short-range wireless communication activation confirmation request signal is received from the customer terminal, may transmit a short-range wireless communication activation command signal to the customer terminal.

Further, the customer terminal, when the short-range wireless communication activation confirmation request signal is received, may check whether the short-range wireless communication function is activated in the customer terminal, the customer terminal, when the short-range wireless communication function is activated, may transmit a short-range wireless communication activation response signal to the reservation server, or the customer terminal, when the short-range wireless communication function is deactivated, may transmit a short-range wireless communication deactivation response signal to the reservation server, andthe customer terminal, when the short-range wireless communication activation command signal is received from the reservation server, may display a short-range wireless communication activation pop-up message window through the screen of the customer terminal.

Further, the short-range wireless communication activation pop-up message window, when the user confirms by touching the screen of the customer terminal, may activate the short-range wireless communication function of the customer terminal or when detecting motion of a preset pattern with respect to the customer terminal using the three-axis sensor configured in the customer terminal.

The reservation and payment method using SNS according to another embodiment of the present invention comprises may comprise displaying, by a customer server, when a preset specific word or specific image is selected from information displayed on a customer terminal while connected to an SNS account related to the customer terminal, a reservation screen for using a service provided by a company related to the selected specific word or specific image bylinkingtothe SNS server and reservation server, transmitting, by the customer server, reservation request information including a plurality of input values corresponding to a plurality of input items included in the reservation screen, personal information related to the user of the customer terminal pre-stored in the customer terminal, and identification information of the customer terminal to the reservation server, performing, by the reservation server, a waiting number issuing function based on the current time-based on the reservation request information bylinkingtothe company terminal related to the reservation request information, transmitting, by the reservation server, the waiting number issuing result to the customer terminal and the company terminal, respectively, displaying, by the customer terminal, the waiting number issuing result transmitted from the reservation server in response to the transmitted reservation request information, transmitting the GPS positioning information of the customer terminal obtained using the GPS function of the customer terminal to the reservation server, forming, when the customer terminal is located indoors of the company, a short-range wireless sensor network with the customer terminal through an indoor wireless positioning sensor module installed indoor of the company to transmit indoor positioning information of the customer terminal to the reservation server, andtransmitting, by the reservation server, the result by determining whether or not the customer entered the company according to the GPS positioning information and indoor positioning information of the customer terminal to the customer terminal and the company terminal, respectively.

In addition, the method further comprises performing, by the reservation server, when a company related to the reservation request information provides a reservation function, the reservation function bylinkingtothe company terminal related to the company based on the reservation request information, transmitting, by the reservation server, a result of performing the reservation function to the customer terminal and the company terminal related to the company, respectively, receiving, by the customer terminal, the result of performing the reservation function transmitted from the reservation server in response to the transmitted reservation request information and displaying the received result of performing the reservation function, prepayment processing, by the customer terminal, a payment for using a service provided by the company according to a user's selection bylinkingtothe SNS server, the reservation server, the company terminal, and a payment server, providing, by the company terminal, a preset part of the payment amount in the form of an advertisement fee to the customer terminal, anddisplaying, by the customer terminal, information on the payment processing result and advertising fee provided from the company terminal.

In addition, the method mayfurther comprisedetermining, by the company terminal, whether to enter the company for the customer terminal based on the waiting number issuing result, providing, by the company terminal, when the non-entrance status of the customer terminal to the company is confirmed by a result of the determination, information on the non-entrance status of the customer terminal to the SNS server, providing, by the company terminal, when the entrance status of the customer terminal to the company is confirmed by a result of the determination, information on the entrance completion status of the customer terminal to the SNS server, processing, by the SNS server, the waiting number issued to the customer terminal as being used based on the information on the company entrance completion status of the customer terminal, transmitting, by the SNS server, an evaluation request message for service satisfaction to the customer terminal, updating, by the SNS server, evaluation information on the company based on a response message transmitted from the customer terminal in response to the transmitted evaluation request message, andproviding, by the SNS server, a preset compensation function to the customer terminal that transmits the response message.

Further, the step of transmitting, by the reservation server, the result by determining whether or not the customer entered the company according to the GPS positioning information and indoor positioning information of the customer terminal to the customer terminal and the company terminal, respectively,may comprises determining, when only the GPS positioning information of the customer terminal is received, that the customer terminal has not entered the company to transmit the result of the customer's non-entrance to the company to the customer terminal and the company terminal, respectively, and determining, when the location information including the indoor positioning information of the customer terminal is received, that the customer terminal has entered the company to transmit the result of the customer's entrance to the company to the customer terminal and the company terminal, respectively.

In addition, the method further may comprises setting, by the reservation server, GPS company proximity location information for a proximity range area of a certain radius based on the GPS company location information registered for each company terminal, transmitting, by the reservation server, when it is determined that the GPS positioning information of the customer terminal is located in the proximity range area set as the GPS company proximity location information, a short-distance wireless communication activation confirmation request signal to the customer terminal, andtransmitting, when a short-range wireless communication deactivation response signal in response to the short-range wireless communication activation confirmation request signal is received from the customer terminal, a short-range wireless communication activation command signal to the customer terminal.

In addition the method may further comprise checking, when the customer terminal receives the short-range wireless communication activation confirmation request signal from the reservation server, whether the short-range wireless communication function is activated in the customer terminal and transmitting, when the short-range wireless communication function is activated, a short-range wireless communication activation response signal to the reservation server, or transmitting, when the short-range wireless communication function is deactivated, a short-range wireless communication deactivation response signal to the reservation server, anddisplaying, when the short-range wireless communication activation command signal is received from the reservation server, a short-range wireless communication activation pop-up message window through the screen of the customer terminal.

In addition, the method may further comprise activating, when the customer terminal confirms the short-range wireless communication activation pop-up message window by touching the screen of the customer terminal, the short-range wireless communication function of the customer terminal, oractivating, when detecting motion of a preset pattern with respect to the customer terminal using the three-axis sensor configured in the customer terminal, the short-range wireless communication function of the customer terminal.

### Advantageous Effects

The present invention moves to a reservation page corresponding to any one of the selected specific text and specific image, or runs a reservation app installed on a terminal to correspond to the selected specific text and specific image todisplaythe corresponding reservation screen, when any one of a specific text and a specific image displayed while using an SNS is selected andperformsa reservation function or a waiting number issuing function using personal information pre-stored in the terminal,therebyhavingeffectsof reducing the burden of publicity for companies that provide reservation-related services and confusion in the field,making reservation and payment according to the customer's preference duetothe proactive information search and reservation of the customer, unlike companies or other advertisers,increasing the satisfaction of SNS users by compensating SNS users for a portion of the payment amount as advertisement fees, which can be used like cash,and minimizing labor and time to check whether the customer has entered the company by confirming andinforming whether the reservation customer has entered the company through the customer terminal and the short-range wireless sensor network.

### Description of Drawings

FIG. 1 is a schematic view illustrating the configuration of a reservation and payment system using SNS according to an embodiment of the present invention.
FIGS. 2,3,4,5,and 6 are flowcharts illustrating a reservation and payment method using SNS according to an embodiment of the present invention.
FIGS. 7,8,9,and 10 are views illustrating a screen of a customer terminal for reservation and payment using SNS according to an embodiment of the present invention.
FIGS. 11 and 12 are views illustrating a process of determining whether a customer has entered a company according to an embodiment of the present invention.
FIGS. 13 and 14 are views illustrating a screen of a customer terminal to explain an activation method when short-range wireless communication of a customer terminal is deactivated according to an embodiment of the present invention.

### Mode for Invention

It should be noted that technical terms used in the present invention are only used to describe specific embodiments and are not intended to limit the present invention. Further, technical terms used in the present invention should be interpreted in terms commonly understood by those of ordinary skill in the art to which the present invention belongs, unless specifically defined otherwise in the present invention. It should not be interpreted in an excessively comprehensive sense or an excessively reduced meaning. Further, when the technical terms used in the present invention are erroneous technical terms that do not accurately express the spirit of the present invention, they should be replaced with technical terms that those skilled in the art can correctly understand. Further, general terms used in the present invention should be interpreted as defined in the dictionary or according to context and should not be interpreted in an excessively reduced sense.

Further, singular expressions used in the present invention include plural expressions unless the context clearly indicates otherwise. Terms such as "consisting of" or "comprising" in the present invention should not be construed as necessarily including all of the various elements or steps described in the invention, and it should be construed that some elements or steps among them may not be included, or additional elements or steps may be further included.

Further, terms including ordinal numbers such as first and second used in the present invention may be used to describe elements, but elements should not be limited by the terms. Terms are used only to distinguish one element from another. For example, the first element may be termed the second element, and similarly, the second element may be termed the first element, without departing from the scope of the present invention.

Hereinafter, preferred embodiments according to the present invention will be described in detail with reference to the accompanying drawings, but the same or similar components are assigned the same reference numerals regardless of drawing reference numerals, and redundant description thereof are excluded.

Further, in describing the present invention, if it is determined that a detailed description of a related known technology may obscure the gist of the present invention, the detailed description areexcluded. Further, it should be noted that the accompanying drawings are only for easily understanding the spirit of the present invention and should not be construed as limiting the spirit of the present invention by the accompanying drawings.

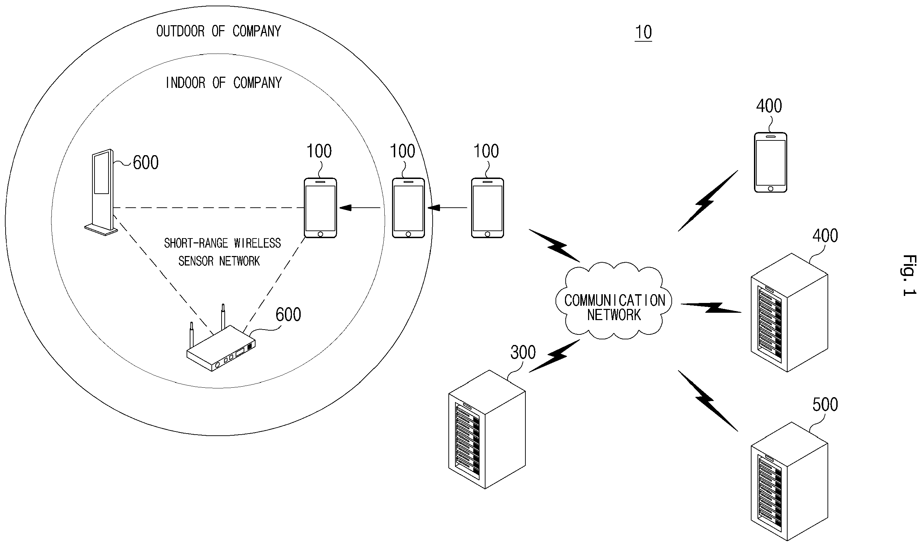

FIG. 1 is a block diagram illustrating the configuration of a reservation and payment system using SNS 10 according to an embodiment of the present invention.

As shown in FIG. 1, the reservation and payment system using SNS 10maycompriseat least one of a customer terminal 100, an SNS server 200, a reservation server 300, a company terminal 400, a payment server 500, and an indoor wireless positioning sensor module 600. Not all of the elements of the reservation and payment system using SNS 10 shown in FIG. 1 are essential elements, and the reservation and payment system 10 using SNS may be implemented with more elements or the reservation and payment system using SNS 10 may be implemented with fewer elements than those shown in FIG 1.

Each of the customer terminal 100, the SNS server 200, the reservation server 300, the company terminal 400, and the payment server 500 may include a communication unit (not shown)for performing a communication function with other terminals, a storage unit (not shown) for storing various information and programs (or applications), a display unit (not shown) for displaying various information and program performing results, an audio output unit (not shown) for outputting voice information corresponding to the various information and program performing results,and a control unit (not shown) for controlling various components and functions of each terminal, and the like.

The customer terminal 100 may include various terminals suchas a smart-phone, portable terminal, mobile terminal, personal digital assistant (PDA), portable multimedia player (PMP) terminal, telematics terminal, navigation terminal, personal computer, laptop computer, slate PC, tablet PC, ultra-book, wearable device (e.g., watch-typeterminal(smartwatch), glass-type terminal (smart glass), head-mounted display (HMD)), Wibro terminal, internet protocol television (IPTV) terminal, smart TV, digital broadcasting terminal, audio video navigation (AVN) terminal, audio/video (A/V) system, flexible terminal, and digital signage device.

Further, the customer terminal 100 communicates with the SNS server 200, the reservation server 300, the company terminal 400, the payment server 500, and the like.

Further, the customer terminal 100 registers as a user for using the social network service provided by the SNS server 200 by linking with the SNS server 200 and registers personal information (or user information) to the SNS server 200. In this case, the personal information (or user information) includes information for identifying a user of a function provided by the corresponding SNS server 200, such as name, identification (ID), password, affiliation, phone number, e-mail address, and the like.

Further, when performing the membership sign-up procedure, the customer terminal 100 can normally complete the membership sign-up process for the SNS server 200 only when the authentication function through the identity authentication means (e.g., mobile phone, credit card, i-PIN, etc.) is completed.

Further,the customer terminal 100 registers as a user for using (or managing) an application program (or application) provided by the reservation server 300 by linking with the reservation server 300 and registers personal information (or user information) to the reservation server 300.In this case, the personal information (or user information) includes information for identifying a user of a function provided by the corresponding reservation server 300, such as name, identification (ID), password, affiliation, phone number, e-mail address, and the like.

Further, when performing the membership sign-up procedure, the customer terminal 100 can normally complete the membership sign-up process for the reservation server 300 only when the authentication function through the identity authentication means (e.g., mobile phone, credit card, i-PIN, etc.) is completed.

Further, the customer terminal 100 links to the reservation server 300 sothata dedicated application for managing a specific function provided by the reservation server 300 (for example, using a service for a specific company and/or purchasing/using a product) is installed in the purchase terminal 100.

Further, the customer terminal 100 performs various programs (or processes/applications/dedicated apps related to the programs) installed in the customer terminal 100.

Further, the customer terminal 100 links to the SNS server 200 to access an SNS account related to a user of the corresponding customer terminal 100.

Further, the customer terminal 100 displays information provided by its own SNS account or another person's SNS account while accessing an SNS account related to the user of the corresponding customer terminal 100.

Further, when a preset specific word or specific image is selected through at least one of click, touch, and voice recognition from the information displayed on the customer terminal 100 according to user selection (or user touch/input), the customer terminal 100 links to the SNS server 200 and the reservation server 300 to display a reservation screen associated with the selected specific word or specific image.In this case, the specific word or specific image may be linked with link information on a reservation screen (or reservation site) for using a service (or purchasing a product) provided by a company related to the specific word or specific image.

Inotherword, when a preset specific word or specific image is selected through at least one of click, touch, and voice recognition from the information displayed on the customer terminal 100 according to user selection (or user touch/input), the customer terminal 100 displays a reservation screen (or a screen of a reservation site) linked to a specific word or a specific image selected in the above manner.

In this case, the customer terminal 100 may display a reservation screen provided by a website managed by the reservation server 300 or a reservation screen related to the specific word or specific image in the specific application execution result screen after installing a specific application provided by the reservation server 300 in the corresponding customer terminal 100 (or while the specific app is installed in the customer terminal 100) andexecutingthe specific application.

In this case, the reservation screen includes information for reserving a service provided by a company related to the specific word or specific imageand includes information about the company related to the specific word or specific image (including, for example, company name, company address/location, company phone number, etc.), company open hours information, price information by service provided (or product provided), discount information (including, for example, credit card company discount information, telecommunications company discount information, coupon information, and the like), reservation date and time selection items, reservation number items, and the like.

In this way, when specific content (e.g., including the specific word, specific image, etc.) is selected from among the contents included in the screen being displayed on the customer terminal 100,the customer terminal 100 displays a preset reservation screen related to the selected specific content so that the user of the customer terminal 100 can conveniently use the service (or product) provided by the company related to the specific content.

Further, the customer terminal 100 checks review information written by other users related to the service and/or product related to the specific word or specific image, the time slot or date when the service and/or product can be used at the lowest price, and discount information.

Further, the customer terminal 100 receives a plurality of input values corresponding to a plurality of input items included in the reservation screen displayed on the customer terminal 100 according to user selection (or user input/touch).In this case, the plurality of input values include desired reservation date and time information, reservation service information,reservation number information, and other request/inquiry information.

Further, the customer terminal 100 transmits reservation request information including the received plurality of input values, personal information related to the user of the corresponding customer terminal 100 pre-stored in the corresponding customer terminal 100, and identification information of the customer terminal 100, etc. to the reservation server 300.

In this case, the customer terminal 100 maytransmit reservation request information including the received plurality of input values, personal information related to the user of the corresponding customer terminal 100 pre-stored in the corresponding customer terminal 100, and identification information of the customer terminal 100, etc. to the reservation server 300 via the SNS server 200.In this case, the reservation request information includes reservation company information (including, for example, company name, company address, company contact information, company's unique code, etc.), desired date and time of reservation information, reservation service information, reservation number information, and other request/inquiry information, etc. Further, the personal information (or user information) includes name, ID, password, to-be-used nickname for reservation, phone number, e-mail address, etc. Further, the identification information of the customer terminal 100 includes mobile directory number (MDN), mobile internet protocol (IP), mobile MAC, subscriber identity module (SIM) card-specific information, serial number, and the like.

In this way, after the customer terminal 100 simply receives a plurality of input values according to user input for a plurality of input items on the reservation screen, the customer terminal 100 transmits the personal information pre-stored in the corresponding customer terminal 100 aswellas reservation request information including the plurality of input valuesto the reservation server 300 sothat a separate personal information input process is omitted, preventing leakage of personal information by others and protecting personal information.

When a company related to the reservation request information provides a reservation function, the customer terminal 100 receives a reservation function execution result transmitted from the reservation server 300 in response to previously transmitted reservation request information, personal information, identification information of the customer terminal 100, etc.

In this case, the reservation function performing result includes company name, company address (or location information), company contact information, company's unique code, reservation date and time information, reservation service information, reservation number information, other request/inquiry information , and the like. Further, the customer terminal 100 displays the received reservation function execution result.

Further, the customer terminal 100 linksto the SNS server 200, the reservation server 300, the company terminal 400 and the payment server 500 toprocess prepayment for using the service (and/or purchasing/using the product) provided by the company.In this case, the customer terminal 100 may perform the entire payment processing or divide payment processing by linking a plurality of terminals including the customer terminal 100 that uses the corresponding company.

Further, the customer terminal 100 processes the corresponding payment processing result provided by the company terminal 400 (or the payment processing result provided by the payment server 500 via the company terminal 400), information on advertisement fee, etc.

Further, the customer terminal 100 performs an on-site payment function for payment due to service use (or product purchase) by linking to the point-of-sales (POS) terminal provided in the corresponding company after visiting the company corresponding to the corresponding company terminal 400 and using the service (or purchasing a product).

Further, the customer terminal 100 displays the payment processing result according to the on-site payment provided by the company terminal 400, information on advertisement fee, etc.

Further, when the plurality of terminals uses the company, the customer terminal 100 may provide the reservation function execution result to a plurality of terminals that will use the company so that reservation information may be checked in each of the plurality of terminals.

In this way, the customer terminal 100 may share (or provide) various information such as a reservation place (including a map), reservation date and time information, standby information, etc. to each of a plurality of terminals. In this case, the customer terminal 100 may receive message reception confirmation and information on whether or not to attend from each of the plurality of terminals in reply.

When the company related to the reservation request information does not provide a reservation function (or does not provide a reservation function, but instead issues a waiting number for a waiting person), the customer terminal 100 receives a waiting number issuing result transmitted from the reservation server 300 in response to previously transmitted reservation request information, personal information, identification information of the customer terminal 100, and the like.In this case, the waiting number issuing result includes waiting number information, remaining order information, waiting number issuing date and time information issued according to the waiting number issuing order by the waiting number issuing device (or on-site issuing machine) (not shown) which links to the company terminal 400 and is provided in the corresponding company and information on the corresponding company related to the company terminal 400 (including, for example, company name, company address, company contact information, company's unique code, and the like).

Further, the customer terminal 100 displays the received waiting number issuing result.

Further, the customer terminal 100 (or a user possessing the corresponding customer terminal 100) visits a company related to the company terminal 400 corresponding to the reserved place at a specific time according to the received reservation functionperforming result, the payment processing result, the waiting number issuing, etc.

In this case, the customer terminal 100 checks the location information of the corresponding customer terminal 100 in real-time and performs short-range wireless communication (or wireless connection) with the adjacent company terminal 400.

As such, it can be confirmed that the customer terminal 100 is located adjacent to the company where the corresponding company terminal 400 is located according to the short-range wireless communication connection between the customer terminal 100 and the company terminal 400. Further, when the customer terminal 100 is connected to the company terminal 400 through short-range wireless communication in a specific time zone, it may be confirmed in a state in which the customer terminal 100 has entered a company related to the company terminal 400.

Further, the customer terminal 100 (or a user holding the corresponding customer terminal 100) visits a company related to the company terminal 400 corresponding to the reserved place at a specific time according to the received reservation function executing result, the payment processing result, the waiting number issuing, etc. and uses a service (and/or purchase a product) provided by a corresponding company, then the customer terminal 100 receives an evaluation request message for service satisfaction transmitted from the SNS server 200.

Further, the customer terminal 100 receives, according to user input, a plurality of input values corresponding to a plurality of input items included in the received service satisfaction evaluation request message.

Further, the customer terminal 100 transmits a response message (or response signal) including the received plurality of input values and identification information of the customer terminal 100 to the SNS server 200.

Further, the customer terminal 100 uploads (or registers) review information according to the use of the company to an SNS account related to the user of the customer terminal 100.

Further, the customer terminal 100receives a preset compensation (or reward) such as cash, virtual currency, points, and the like from the SNS server 200 according to the response message transmitted to the SNS server 200, the review information uploaded to the SNS account related to the user of the customer terminal 100 and the like.

The SNS server 200 communicates with the customer terminal 100, the reservation server 300, the company terminal 400, the payment server 500, and the like.

Further, the SNS server 200 links to the customer terminal 100to perform a registration process and a membership registration process for the user of the customer terminal 100 as a user (or administrator) to use the social network service provided by the SNS server 200.

Further, the SNS server 200 links to the customer terminal 100 to manage access to an SNS account related to a user of the customer terminal 100.

Further, the SNS server 200 provides information included in the SNS account of a specific user accessed by the customer terminal 100 to the customer terminal 100. Further, when a preset specific word or specific image is selected through at least one of click, touch, and voice recognition from the information displayed on the customer terminal 100 according to user selection (or user touch/input), the customer terminal 100 links to the customer terminal 100 and the reservation server 300 to provide the customer terminal 100 with a reservation screen linked to a specific word or a specific image.

Further, the SNS server 200 links to the customer terminal 100, the reservation server 300, the company terminal 400, and the payment server 500 to process prepayment according to the use of services (and/or purchase/use of products) provided by the company.

In this case,the user corresponding to the customer terminal 100 visits a company corresponding to the corresponding company terminal 400 and uses a service or purchases a product. Then the SNS server 200 may perform an on-site payment function for payment according to the use of a service (or purchase of a product) provided by the corresponding company.

When it is not confirmed that the customer terminal 100 (or a user holding the customer terminal 100) has entered the corresponding company at the specific reservation time (or according to the comparison between the waiting number that can be admitted in real-time and the waiting number information according to the waiting number issuing result), the SNS server 200 receives information on the company non-entering status of the corresponding customer terminal 100 provided from the company terminal 400.

Further, the SNS server 200 displays (or stores/manages) the received information on the non-entering status of the customer terminal 100.

When it is confirmed that the customer terminal 100 (or a user holding the customer terminal 100) has entered the corresponding company at the specific reservation time (or according to the comparison between the waiting number that can be admitted in real-time and the waiting number information according to the waiting number issuing result), the SNS server 200 receives information on the company entrance completion status (or information on the completion status of the entrance of the company) of the corresponding customer terminal 100 provided from the company terminal 400.

Further, the SNS server 200 confirms the visit to the corresponding company from the corresponding customer terminal 100 or processes the waiting number issued to the corresponding customer terminal 100 as being used according to the result of performing the reservation function provided to the customer terminal 100 based on the information on the company entrance completion status (or information on the completion status of the entrance of the company).

Further, the SNS server 200 transmits an evaluation request message for service satisfaction to the customer terminal 100 after a preset time (e.g., 2 hours) has elapsed.

Further, the SNS server 200 receives a response message corresponding to the evaluation request message transmitted from the customer terminal 100.

Further, the SNS server 200 updates evaluation information for the corresponding company based on the response message.

Further, the SNS server 200 provides a preset compensation (or reward) function such as cash, virtual currency, points, and the like to the customer terminal 100 that transmits the response message.

The reservation server 300 communicates with the customer terminal 100, the SNS server 200, the company terminal 400, the payment server 500, and the like. Further, the reservation server 300 links to the customer terminal 100 to allow the user of the customer terminal 100 to use a dedicated application provided by the reservation server 300 by the user of the customer terminal 100 to perform the registration process as a user (or administrator) for performing the functions provided by the dedicated application and the membership registration process for the user.

Further, when a preset specific word or specific image is selected through at least one of click, touch, and voice recognition from the information displayed on the customer terminal 100 according to user selection (or user touch/input), the reservation server 300 links to the customer terminal 100 and the SNS server 200 to provide the customer terminal 100 with a reservation screen linked to a specific word or a specific image. In this case, the reservation screen may be provided as a web page or a website page managed (or operated) by the reservation server 300. Further, the reservation server 300 receives reservation request information transmitted from the customer terminal 100, personal information related to the user of the corresponding customer terminal 100, identification information of the customer terminal 100, and the like.

Further, the reservation server 300 checks (or determines) whether a reservation function is provided by a company related to the reservation request information based on the received reservation request information.

As a result of the confirmation, when the company related to the received reservation request information provides a reservation function, the reservation server 300 links to the company terminal 400 related to the company based on the reservation request information to perform a reservation function.

That is, as a result of the confirmation, when the company related to the received reservation request information provides a reservation function, the reservation server 300 performs a reservation function according to the reservation service information at the desired reservation date and time-based on the desired reservation date and time, reservation service information, and reservation number information included in the reservation request information.

Further, the reservation server 300 transmits (or provides) the reservation function performing result to the customer terminal 100 and the company terminal 400 related to the corresponding company, respectively. In this case, the reservation function performing result includes company name, company address (or location information), company contact information, company's unique code, reservation date and time information, reservation service information, reservation number information, other request/inquiry information, and the like.

Further, the reservation server 300 links to the customer terminal 100, the SNS server 200, the company terminal 400, and the payment server 500 to process prepayment according to the use of services (and/or purchase/use of products) provided by the company.

Further, as a result of the confirmation, when the reservation function is not provided by the company related to the received reservation request information (or when the reservation function is not provided and instead a waiting number is issued for the waiting person), the reservation server 300 links to the corresponding company terminal 400 to perform a function of issuing a waiting number based on the current time-based on the reservation request information.

Further, the reservation server 300 transmits (or provides) the waiting number issuing result to the customer terminal 100 and the company terminal 400, respectively. In this case, the waiting number issuing result includes waiting number information, remaining order information, waiting number issuing date and time information issued according to the waiting number issuing order by the waiting number issuing device (or on-site issuing machine) (not shown) which links to the company terminal 400 and is provided in the corresponding company and information on the corresponding company related to the company terminal 400 (including, for example, company name, company address, company contact information, company's unique code, and the like).

At this time, the reservation server 300 may link to the company terminal 400 and/or the waiting number issuing device to perform a waiting number issuing function close to the desired reservation time-based on the reservation request information and the real-time waiting number issued by the waiting number issuing device to use the service provided by the company in a time slot close to the desired reservation time included in the reservation request information.

That is, the reservation server 300 may be configured to perform the waiting number issuing function before a preset time (for example, 30 minutes) from the desired reservation time-based on the number of waiting numbers processed per preset hour (for example, per 10 minutes) in the company terminal 400 (or waiting number issuing device), the real-time current time, and the desired reservation time, and it may be configured so that the user of the customer terminal 100 may use a service (or product) provided by a corresponding company at a time adjacent to a desired time.

For example, when the corresponding company processes 5 waiting numbers per 10 minutes, the current time is 11:00 am, and the desired time for reservation is 2:00 p.m., the reservation server 300 may perform a waiting number issuing function at 1:30 p.m. in consideration of the real-time waiting number issued by the corresponding company terminal 400 (including for example waiting number 450, 32 remaining waiting persons)and also provide the corresponding waiting number issuing result to the customer terminal 100.

In an embodiment of the present invention, when the company does not provide a reservation function, although it describes performing the waiting number issuing function, but it is not limited thereto. Regardless of whether the corresponding company provides a reservation function, the reservation server 300 may also link to the corresponding company terminal 400 to independently perform a waiting number issuing function based on the reservation request information.

The company terminal 400 may be a terminal related to a company that provides services and/or products related to a specific word or specific image. In this case, the company terminal 400 may be a POS terminal provided by the company.

Further, when the corresponding company provides a reservation function, the company terminal 400 links to the reservation server 300 to perform a reservation function based on the reservation request information.

That is, when the corresponding company provides a reservation function, the company terminal 400 links to the reservation server 300 to perform a reservation function according to the reservation service information on the desired reservation date and time-based on the desired reservation date and time, reservation service information, reservation number information, and the like included in the reservation request information.

Further, after the reservation function is normally performed, the company terminal 400 receives a reservation function performing a result transmitted from the reservation server 300. In this case, the reservation function performing result includes company name, company address (or location information), company contact information, company's unique code, reservation date and time information, reservation service information, reservation number information, other request/inquiry information, and the like.

Further, the company terminal 400 displays (or stores/manages) the received reservation function performing result.

Further, the company terminal 400 links to the customer terminal 100, the SNS server 200, the reservation server 300 and the payment server 500 to process prepayment according to use of services (and/or purchase/use of products) provided by the corresponding company.

Further, the company terminal 400 provides a predetermined portion of the payment amount to the corresponding customer terminal 100 in the form of an advertisement fee, such as cash, virtual currency, points and the like, according to the fee payment. Further, when the corresponding company does not provide a reservation function (or does not provide a reservation function, but instead issues a waiting number for a waiting person), the company terminal 400 links to the reservation server 300 to perform the waiting number issuing function based on the current time-based on the reservation request information.

In this case, the company terminal 400 and/or the waiting number issuing device link to the reservation server 300 to perform a waiting number issuing function close to the desired reservation time-based on the reservation request information and the real-time waiting number issued by the waiting number issuing device to use the service provided by the company in a time slot close to the desired reservation time included in the reservation request information.

That is, the company terminal 400 and/or the waiting number issuing device link to the reservation server 300 to perform the waiting number issuing function before a preset time (for example, 30 minutes) from the desired reservation time-based on the number of waiting numbers processed per preset hour (for example, per 10 minutes) in the company terminal 400 (or waiting number issuing device), the real-time current time, and the desired reservation time, and it may be configured so that the user of the customer terminal 100 may use a service (or product) provided by the corresponding company at a time adjacent to a desired time.

Further, the company terminal 400 receives the waiting number issuing result transmitted from the reservation server 300.

Further, the company terminal 400 displays (or stores/manages) the received waiting number issuing result.

Further, the company terminal 400 determines whether or not the corresponding customer terminal 100 (or user holding the customer terminal 100) enters the corresponding company at thespecific reservation time (or according to the comparison between the waiting number that can be admitted in real-time and the waiting number information according to the waiting number issuing result), based on the reservation function performing result, the payment processing result, the waiting number issuing result and the like.

In this case, to determine whether the corresponding customer terminal 100 has entered the company related to the corresponding company terminal 400, the company terminal 400 may determine whether the customer terminal 100 is located (or maintained) within a preset radius (for example, 50 meters) from the company terminal 400 (or corresponding company related to the corresponding company terminal 400) for more than a preset time (e.g. 30 minutes) based on the specific reservation time. In this case, the real-time location information of the customer terminal 100 may beconfirmed through a location recognition sensor (for example, including aglobal positioning system (GPS) sensor and the like) and the like provided in the customer terminal 100, or the communication connection state may be confirmed by a short-range communication method.

Further, in the case of a performance such as a concert or a movie, in order to determine whether the corresponding customer terminal 100 has entered the company (or performance venue) related to the corresponding company terminal 400, the company terminal 400 may determine whether the customer terminal 100 is located (or maintained) within a preset radius (for example, 50 meters) from the corresponding company terminal 400 (or corresponding company related to the corresponding company terminal 400) at a preset ratio (for example, 50%) or more during the corresponding performance time-based on the performance time related to the corresponding specific reservation time.

As a result of the determination, when it is not confirmed that the customer terminal 100 (or a user holding the customer terminal 100) has entered the corresponding company at the specific reservation time (or according to the comparison between the waiting number that can be admitted in real-time and the waiting number information according to the waiting number issuing result), the company terminal 400 provides information on the company non-entering status of the corresponding customer terminal 100 to the SNS server 200.

Further, as a result of the determination, when it is confirmed that the customer terminal 100 (or a user holding the customer terminal 100) has entered the corresponding company at the specific reservation time (or according to the comparison between the waiting number that can be admitted in real-time and the waiting number information according to the waiting number issuing result), the company terminal 400 provides information on the company entrance completion status (or information on the completion status of the entrance of the company) of the corresponding customer terminal 100 to the SNS server 200.

The payment server 500 communicates with the customer terminal 100, the SNS server 200, the reservation server 300, the company terminal 400, and the like. Further, the payment server 500 links to the customer terminal 100, the SNS server 200, the reservation server 300, and the company terminal 400 to process prepayment according to the use of services (and/or purchase/use of products) provided by the corresponding company.

Further, the payment server 500 provides payment processing results to the customer terminal 100, the SNS server 200, the reservation server 300, the company terminal 400, and the like, respectively.

In this way, when either a specific text or a specific image displayed while using the SNS is selected, it moves to the reservation page corresponding to any one of the selected specific text and specific image, or executes the reservation application installed in the terminal to display the corresponding reservation screen, and uses the personal information pre-stored in the terminal to perform a reservation function or waiting number providing function.

Meanwhile, the customer terminal 100 may transmit the GPS positioning information of the customer terminal 100 obtained by using the GPS function to the reservation server 300 and receive and display the result of whether or not the company has entered (entrance or non-entrance status or result) based on the transmitted GPS positioning information and indoor positioning information to be described later. The indoor wireless positioning sensor module 600 is configured as a modularized sensor installed in a company's room, such as a kiosk, a POS terminal, and the like. When the customer terminal 100 is located indoor of the company reserved by the customer, a short-range wireless sensor network is formed with the customer terminal 100 to transmit indoor positioning information of the indoor wireless positioning sensor module 600 and the customer terminal 100 to the reservation server 300. In this case, indoor positioning information of the customer terminal 100 may be obtained using the indoor wireless positioning sensor module 600 equipped with functions such as Wi-Fi, Bluetooth (or beacon), and the like. In this case, each customer terminal 100 is identified using the app key (unique number of the customer terminal 100) registered by the customer terminal 100 in the reservation server 300 at the time of making a reservation for the company, andindoor positioning information for the identified customer terminal 100 may be acquired and transmitted to the reservation server 300.

The reservation server 300 may determine whether the customer enters the company according to the GPS positioning information and the indoor positioning information of the customer terminal 100 and transmit the result to the customer terminal 100 and the company terminal 400, respectively. In this case, the GPS positioning information of the customer terminal 100 is location information that can be obtained when the customer terminal 100 is located outdoors of the company. As described above, the indoor positioning information is location information that can be obtained when the customer terminal 100 is located indoors of the corresponding company.

The reservation server 300 may determine that the customer terminal 100 is not entering the company when only the GPS positioning information of the customer terminal 100 is received (when there is no indoor positioning information), and accordingly, the determination result, that is, the result of the customer not entering the company may be transmitted to the customer terminal 100 and the company terminal 400, respectively. The transmitted company non-entrance result may be displayed on the screens of the customer terminal 100 and the company terminal 400.

Further, when the location information including the indoor positioning information of the customer terminal 100 is received (generally, it is difficult to obtain GPS information when the terminal is located indoors), the reservation server 300 may determine that the customer terminal 100 has entered indoor of the corresponding company, and accordingly, the determination result, that is, the result of the customer entering the company may be transmitted to the customer terminal 100 and the company terminal 400, respectively. The transmitted company entrance result may be displayed on the screens of the customer terminal 100 and the company terminal 400 and may be provided in a separate notification message method.

The reservation server 300 may set GPS company proximity location information for a proximity range area defined as being within a certain radius from the corresponding company based on the GPS company location information,that is, the company's GPS location information, registered by the company terminal 400 for each company terminal 400. Further, when it is determined that the GPS positioning information of the customer terminal 100 is located in the proximity range area set as the GPS company proximity location information, the reservation server 300 transmits a short-range wireless communication activation confirmation request signal to the customer terminal 100, and when a short-range wireless communication deactivation response signal is received from the customer terminal 100 in response to a corresponding short-range wireless communication activation confirmation request signal, the reservation server 300 may transmit a short-range wireless communication activation command signal to the customer terminal 100. Accordingly, when the customer terminal 100 receives the short-range wireless communication activation confirmation request signal from the reservation server 300, it checks whether the short-range wireless communication function is activated in the customer terminal 100. When the short-distance wireless communication function is activated, a short-range wireless communication activation response signal may be transmitted to the reservation server 300.When the short-range wireless communication function is deactivated, a short-range wireless communication deactivation response signal may be transmitted to the reservation server 300.

In this case, when the short-range wireless communication activation command signal is received from the reservation server 300, the customer terminal 100 displays a short-range wireless communication activation pop-up message window through the screen of the customer terminal to guide the short-range wireless communication function of the customer terminal 100 to be activated.

In this case, when the user confirms the short-range wireless communication activation pop-up message window through the screen touch of the customer terminal 100, the short-range wireless communication function of the customer terminal 100 may be activated. That is, the customer terminal 100 can automatically activate a short-range wireless communication function such as Wi-Fi or Bluetooth by touching (or clicking) a confirmation button on a pop-up message window.

Further, for the short-range wireless communication activation pop-up message window, movement of a preset pattern with respect to the customer terminal 100 is detected using the 3-axis sensor configured in the customer terminal 100 to activate the short-range wireless communication function of the customer terminal 100. For example, when the customer terminal 100 is shaken three times in a left-right direction or two times in an up-and-down direction, a short-range wireless communication function such as Wi-Fi or Bluetooth may be automatically activated in the customer terminal 100.

In this way, when the customer terminal 100 is located near the company, it is checked whether a communication environment capable of obtaining indoor positioning information is set when the customer terminal 100 is located indoors of the company. Then, when it is not set, the corresponding communication environment is set more easily so as to determine whether the customer terminal 100 has entered the indoor of the company based on the indoor positioning information.

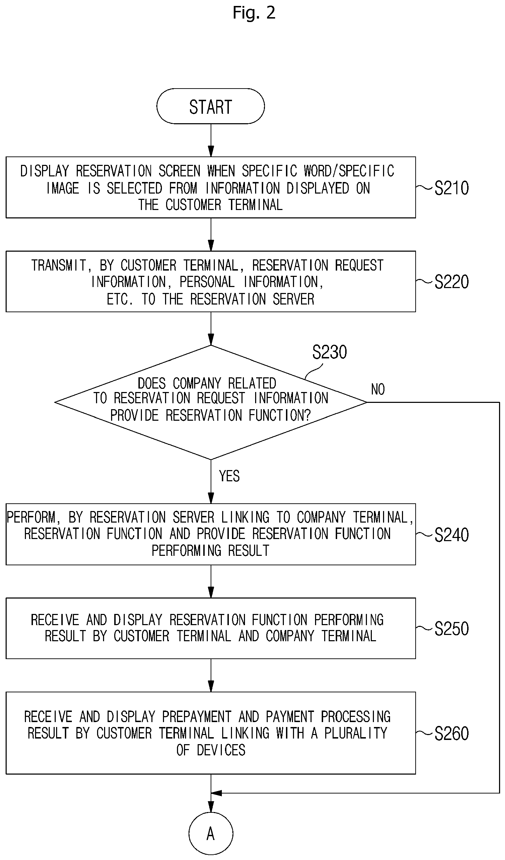

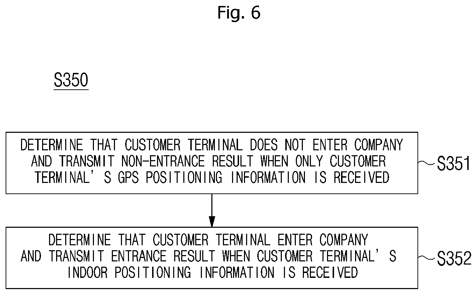

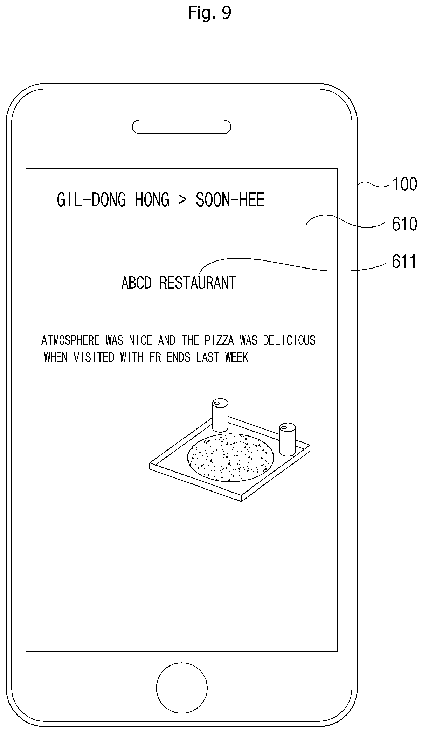

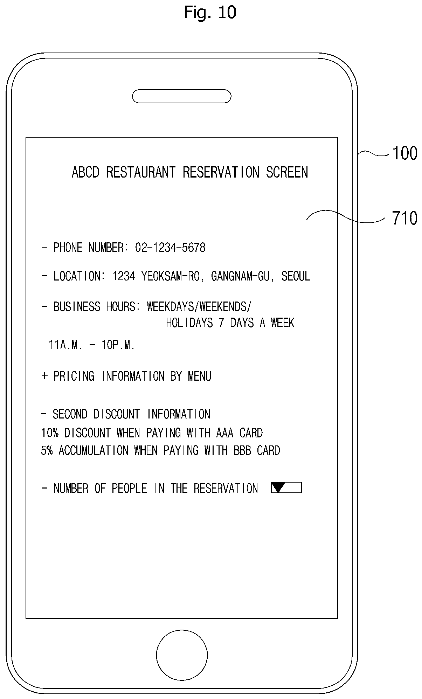

Hereinafter, a reservation and payment method using SNS according to the present invention is described in detail with reference to FIGS. 2, 3, 4, 5, 6, 7, 8, 9, 10, 11, 12, 13, and 14.

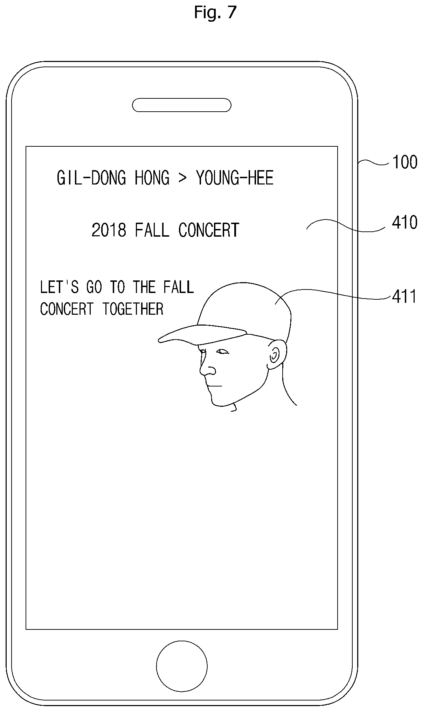

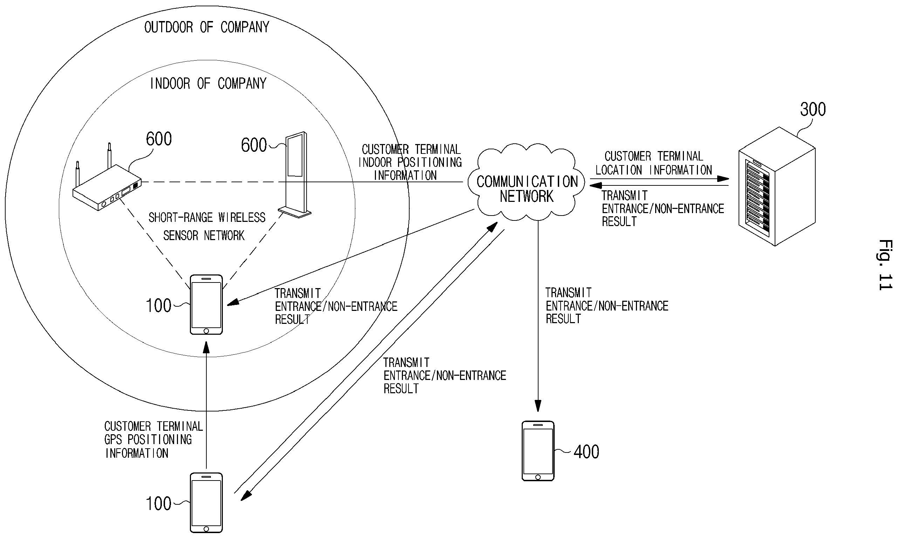

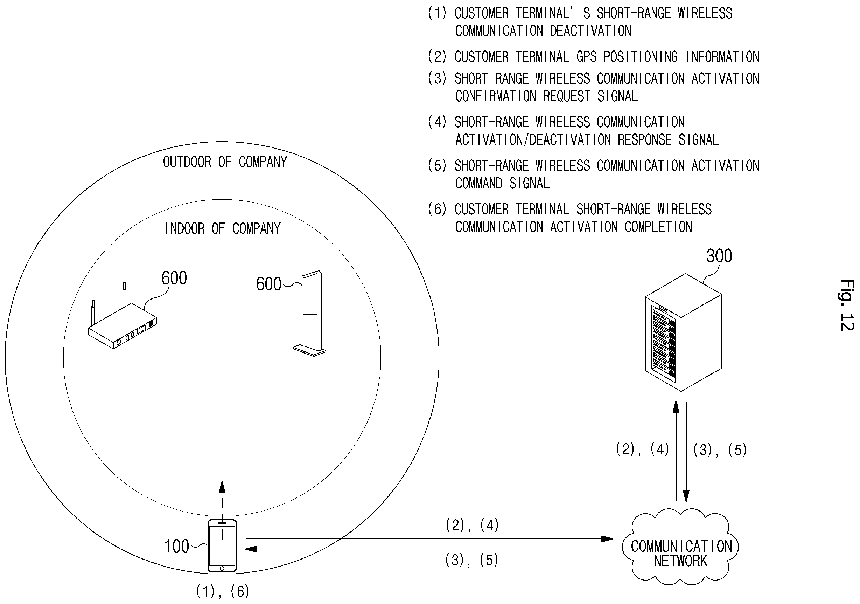

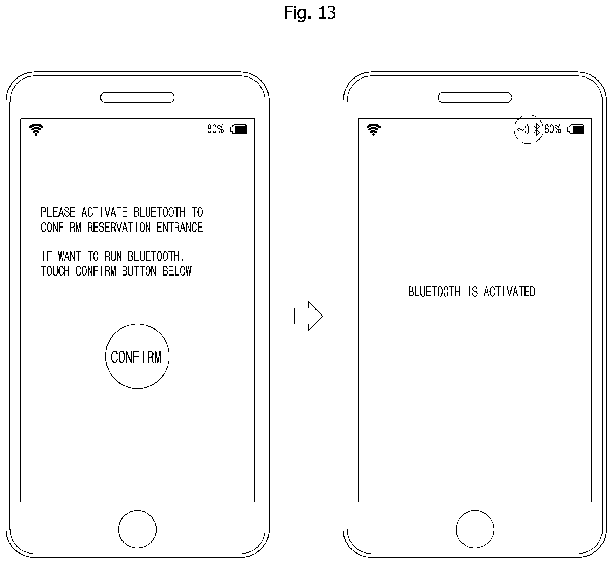

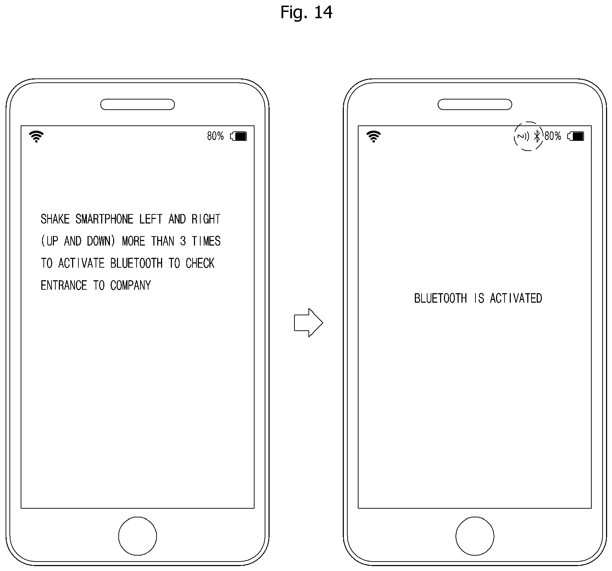

FIGS. 2,3,4,5,and 6 are flowcharts illustrating a reservation and payment method using SNS according to an embodiment of the present invention. FIGS. 7,8,9,and 10 are views illustrating a screen of a customer terminal for reservation and payment using SNS according to an embodiment of the present invention. FIGS. 11 and 12 are views illustrating a process of determining whether a customer has entered a company according to an embodiment of the present invention. FIGS. 13 and 14 are views illustrating a screen of a customer terminal to explain an activation method when short-range wireless communication of a customer terminal is deactivated according to an embodiment of the present invention.

First, while accessing an SNS account related to the user of the corresponding customer terminal 100, the customer terminal 100 displays information provided by its own SNS account or another person's SNS account.

Further, when a preset specific word or specific image is selected through at least one of click, touch, and voice recognition from the information displayed on the customer terminal 100 according to user selection (or user touch/input), the customer terminal 100 links to the SNS server 200 and the reservation server 300 to display a reservation screen associated with the selected specific word or specific image. In this case, the specific word or specific image may be linked to link information about a reservation screen (or reservation site) for using a service (or purchasing a product) provided by a company related to the specific word or specific image.

In this case, the customer terminal 100 displays a reservation screen provided by a website managed by the corresponding reservation server 300 ora specific application provided by the reservation server 300 is installed on the customer terminal 100 (or while the specific application is installed on the customer terminal 100), then the specific application is executed, and then a reservation screen related to the specific word or specific imagemay be displayed in the application's executing result screen.

In this case, the reservation screen includes information for reserving a service provided by a company related to the specific word or specific image and includes information about the company related to the specific word or specific image (including, for example, company name, company address/location, company phone number, etc.), company open hours information, price information by service provided (or product provided), discount information (including, for example, credit card company discount information, telecommunications company discount information, coupon information, and the like), reservation date and time selection items, reservation number items, and the like.

In this way, when specific content (including, for example, a specific word, specific image, and the like) is selected from among the contents included in the screen being displayed on the customer terminal 100,the customer terminal 100 displays a preset reservation screen related to the selected specific content so that the user of the customer terminal 100 can conveniently use the service (or product) provided by the company related to the corresponding specific content.

For example, as shown in FIG. 2, in a state in which the first customer terminal 100 accesses an SNS account related to Gil-dong Hong, the user of the corresponding first customer terminal, the first customer terminal displays the first information 410 provided by Young-hee's SNS account in which the friend function with Gil-dong Hong is set.

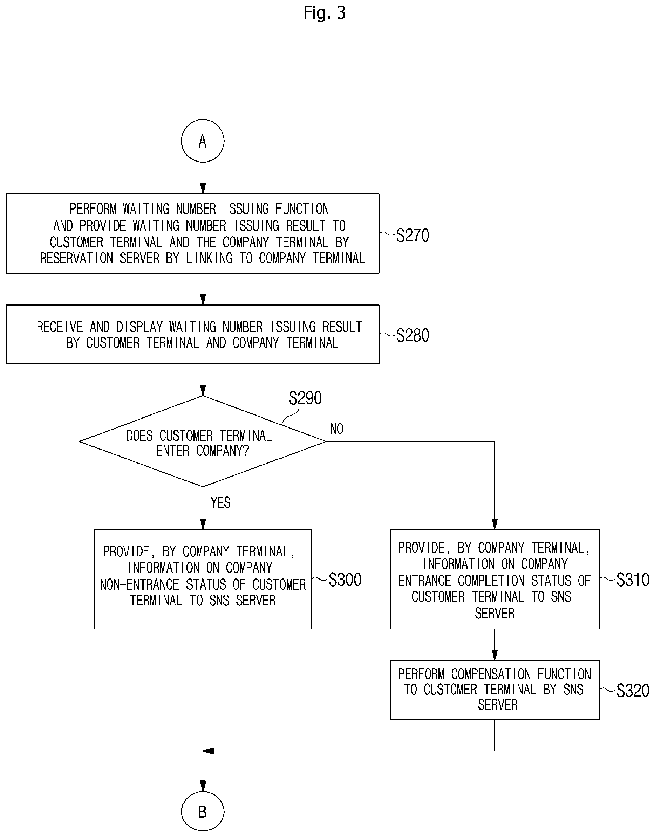

Further, when the first image 411 related to the fall 2018 concert is selected from among the first information 410 being displayed on the first customer terminal, as shown in FIG. 3, the first customer terminal links to the SNS server 200 and the reservation server 300 to display the first reservation screen 510 related to the selected first image 411. In this case, the first reservation screen 510 includes information on the fall 2018 concert (including, for example, singer information and the like), information on the company organizing the fall concert (including, for example, XYZ public relations agency and the like), and information on the fall concert date and time (for example, October 27, 2018, from 4:00 p.m. to 6:00 p.m., 7:00 p.m. to 9:00 p.m.), the first price information (for example, KRW 300,000 for S seat, KRW 200,000 for A seat, KRW 10,000 for B seat, KRW 50,000 for C seat, and the like), the first discount information (for example, 10% discount when paying with AAA card, 5% accumulation when paying with BBB card, and the like), the number of people in the reservation, and the like.

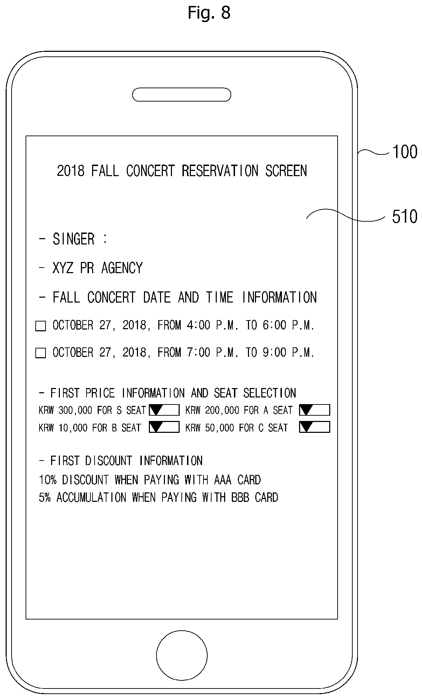

As another example, as shown in FIG. 7, in a state in which the second customer terminal 100 accesses an SNS account related to Chul-soo, the user of the corresponding second customer terminal, the second customer terminal displays the second information 610 provided by an arbitrary user ofSoon-hee's SNS account. Further, when the second text 611 related to the ABCD restaurant is selected from the second information 610 being displayed on the second customer terminal, as shown in FIG. 8, the second customer terminal linksto the SNS server 200 and the reservation server 300 to display the second reservation screen 710 related to the selected second text 611. In this case, the second reservation screen 710 includes information on the ABCD restaurant (for example, ABCD restaurant, phone number, location information, and the like), company open time information (for example, weekdays/weekends/holidays from 11:00 am to 10:00 pm), price information for each menu, the second discount information (including, for example, 10% discount when paying with anAAA card, 5% accumulation when paying with aBBB card, and the like), the number of people in the reservation, and the like (S210).

Thereafter, the customer terminal 100 receives a plurality of input values corresponding to a plurality of input items included in the reservation screen displayed on the customer terminal 100 according to user selection (or user input/touch). In this case, the plurality of input values include desired reservation date and time information, reservation service information, reservation number information, other request/inquiry information, and the like.

Further, the customer terminal 100 transmits reservation request information including the received plurality of input values, personal information related to the user of the corresponding customer terminal 100 pre-stored in the corresponding customer terminal 100, and identification information of the customer terminal 100, and the like to the reservation server 300. In this case, the customer terminal 100 may transmit reservation request information, personal information related to the user of the corresponding customer terminal 100 pre-stored in the corresponding customer terminal 100, and identification information of the customer terminal 100, and the like to the reservation server 300 via the SNS server 200. In this case, the reservation request information includes reservation company information (including, for example, company name, company address, company contact information, company's unique code, and the like), desired date and time of reservation information, reservation service information, reservation number information, and other request/inquiry information, and the like. Further, the personal information (or user information) includes name, ID, password, to-be-used nickname for reservation, phone number, e-mail address, and the like. Further, the identification information of the customer terminal 100 includes MDN, mobile IP, mobile MAC, SIM card-specific information, serial number, and the like.

For example, the first customer terminal receives a plurality of first input values including information on the desired fall concert date and time (for example, October 27, 2018, 7:00 p.m. to 9:00 pm), seat information (for example, 2 seats in S2), the first discount selection information (for example, AAA card payment), and the like, according to the user's selection, from the first reservation screen 510 shown in FIG. 8.

Further, the first customer terminal transmits the first reservation request information including the received plurality of first input values, the first personal information related to Gil-dong Hong, identification information of the first customer terminal, and the like to the reservation server 300 via the SNS server 200. In this case, the first reservation request information includes information on the first reservation company (for example, XYZ public relations agency, company-specific code AOA12345, and the like), information on the desired fall concert date and time (for example, October 27, 2018, 7:00 p.m. to 9:00 p.m.), seat information (for example, 2 seats in S2), the first discount selection information (for example, AAA card payment), and the like.

For another example, the second customer terminal receives a plurality of first input values including information on the desired fall concert date and time (for example, October 27, 2018, 2:00 pm), reservation number information (for example, 6 adults), reservation service information (for example, A course), the second discount selection information (for example, AAA card payment), and the like, according to the user's selection, from the second reservation screen 710 shown in FIG. 8. Further, the second customer terminal transmits the second reservation request information including the received plurality of second input values, the second personal information related to Chul-soo, identification information of the second customer terminal, and the like to the reservation server 300. In this case, the second reservation request information includes information on the second reservation company (including, for example, ABCD restaurant, location information, phone number, company-specific code ABA98765, and the like), information on the desired fall concert date and time (for example, October 27, 2018, 2:00 pm), reservation number information (for example, 6 adults), reservation service information (for example, A course), the second discount selection information (for example, AAA card payment), and the like (S220).

Thereafter, the reservation server 300 receives reservation request information, personal information related to the user of the corresponding customer terminal 100, identification information of the customer terminal 100, and the like transmitted from the customer terminal 100.

Further, the reservation server 300 checks (or determines) whether a reservation function is provided by a company related to the reservation request information based on the received reservation request information.

For example, the reservation server 300 receives the first reservation request information transmitted from the first customer terminal, the first personal information related to Gil-dong Hong, identification information of the first customer terminal, and the like.

Further, the reservation server 300 checks whether the corresponding XYZ public relations agency provides a reservation function for the fall 2018 concert based on the received first reservation request information.

As another example, the reservation server 300 receives the second reservation request information, the second personal information related to Chul-soo, identification information of the second customer terminal, and the like transmitted from the second terminal.

Further, the reservation server 300 checks whether the corresponding ABCD restaurant provides a reservation function based on the received second reservation request information (S230).

As a result of the confirmation, when the company related to the received reservation request information provides a reservation function, the reservation server 300 links to the company terminal 400 related to the company based on the reservation request information to perform a reservation function.

That is, as a result of the confirmation, when the company related to the received reservation request information provides a reservation function, the reservation server 300 performs the reservation function according to the corresponding reservation service information at a desired reservation date and time-based on the desired reservation date and time, reservation service information, and reservation number information included in the reservation request information.

Further, the reservation server 300 transmits (or provides) the reservation function performing result to the customer terminal 100 and the company terminal 400 related to the company, respectively. In this case, the reservation function performing result includes company name, company address (or location information), company contact information, company's unique code, reservation date and time information, reservation service information, reservation number information, other request/inquiry information, and the like.

As an example, as a result of the confirmation, when the XYZ public relations agency provides a reservation function for the fall 2018 concert, the reservation server 300 links to the first company terminal 400 related to the corresponding XYZ public relations agency to perform the reservation function for the fall 2018 concert according to the desired fall concert date and time (for example, October 27, 2018, 7:00 p.m. to 9:00 p.m.), reservation number information (for example, 6 adults), seat information (for example, 2 seats in S2), venue information (for example, Jamsil Olympic Stadium), the first discount selection information (for example, AAA card payment), and the like based on the received first reservation request information. Further, the reservation server 300 transmits the reservation function performing result for the fall 2018 concert to the first customer terminal and the first company terminal, respectively. In this case, the reservation function performing result for the fall 2018 concert includes XYZ public relations agency, reservation date and time information (for example, October 27, 2018, 7:00 p.m. to 9:00 p.m.), venue information (for example, Jamsil Olympic Stadium), seat information (for example, 2 seats in S2), the first discount selection information (for example, AAA card payment), the reservation function performing date information (for example, October 5, 2018, 3:30 p.m. when the reservation function is performed), and the like (S240).

Thereafter, the customer terminal 100 receives a reservation function performing result transmitted from the reservation server 300 in response to previously transmitted reservation request information, personal information, identification information of the customer terminal 100, and the like.

Further, the customer terminal 100 displays the received reservation function performing result.

Further, the company terminal 400 receives the reservation function performing result transmitted from the reservation server 300 and displays (or stores/manages) the received reservation function performing result.

For example, the first customer terminal receives the reservation function performing result for the fall 2018 concert transmitted from the reservation server 300 in response to previously transmitted first reservation request information, first personal information, and the like and displays the reservation function performing result for the fall 2018 concert.

Further, the first company terminal associated with XYZ public relations agency receives the reservation function performing result for the 2018 fall concert transmitted from the reservation server 300 and displays the received reservation function performing result for the 2018 fall concert (S250).

Then, the customer terminal 100 links to the SNS server 200, the reservation server 300, the company terminal 400, and the payment server 500 to process prepayment according to the use of services (and/or purchase/use of theproduct) provided by the corresponding company.In this case, the customer terminal 100 may perform the entire payment processing or divide payment processing by linking a plurality of terminals including the customer terminal 100,which uses the corresponding company.

Further, the company terminal 400 provides a predetermined portion of the payment amount to the corresponding customer terminal 100 in the form of an advertisement fee, such as cash, virtual currency, points and the like, according to the fee payment. Further, the customer terminal 100 displays the corresponding payment processing result provided from the company terminal 400 (or the payment processing result provided from the payment server 500 via the company terminal 400), information on advertisement fee, and the like.

For example, the first customer terminal links to the SNS server 200, the reservation server 300, the first company terminal, and the payment server 500 to process a payment of KRW 540,000 with a 10% discount applied to the AAA card payment for the fee of KRW 600,000 for 2 S seats related to the 2018 fall concert.

Further, the first company terminal receives a payment processing result of KRW 540,000 related to the 2018 fall concert transmitted from the payment server 500. Further, the terminal of the first company sets KRW 5,400, which is a preset 1%, as a point for the payment process of KRW 540,000.

Further, the first company terminal transmits the payment processing result of KRW 540,000 related to the 2018 fall concert and the information on the advertisement fee set at KRW 5,400 to the first customer terminal.

Further, the first customer terminal receives the payment processing result of KRW 540,000 related to the 2018 fall concert and the information on the advertisement fee set at KRW 5,400 transmitted from the first company terminal,andthelikeanddisplaysthe received payment processing result of KRW 540,000 related to the 2018 fall concert and the information on the advertisement fee set at KRW 5,400.

Further, the first customer terminal provides the reservation function performing result for the 2018 fall concert to a terminal (not shown) possessed by an acquaintance who attends the corresponding concert together (S260).

Further, as a result of the confirmation, when the reservation function is not provided by the company related to the received reservation request information (or when the reservation function is not provided and instead a waiting number is issued for the waiting person), the reservation server 300 links to the corresponding company terminal 400 to perform waiting number issuing function based on the current time-based on the reservation request information.

Further, the reservation server 300 transmits (or provides) the waiting number issuing result to the customer terminal 100 and the company terminal 400, respectively. In this case, the waiting number issuing result includes waiting number information, remaining order information, waiting number issuing date and time information issued according to the waiting number issuing order by the waiting number issuing device (or on-site issuing machine) (not shown) which links to the company terminal 400 and is provided in the corresponding company, and information on the corresponding company related to the company terminal 400 (including, for example, company name, company address, company contact information, company's unique code, and the like).

In this case, the reservation server 300 may link to the company terminal 400 and/or the waiting number issuing device to perform a waiting number issuing function close to the desired reservation time-based on the reservation request information and the real-time waiting number issued by the waiting number issuing device to use the service provided by the company in a time slot close to the desired reservation time included in the reservation request information.

That is, the reservation server 300 may be configured to perform the waiting number issuing function before a preset time (for example, 30 minutes) from the desired reservation time-based on the number of waiting numbers processed per preset hour (for example, per 10 minutes) in the company terminal 400 (or waiting number issuing device), the real-time current time, and the desired reservation time, and it may be configured so that the user of the customer terminal 100 may use a service (or product) provided by a corresponding company at a time adjacent to a desired time.

For example, as a result of the confirmation, when the corresponding ABCD restaurant does not provide a reservation function, the reservation server 300 links to the second company terminal 400 related to the corresponding ABCD restaurant to perform the waiting number issuing function based on the current time (for example, October 27, 2018, 11:00 a.m.) based on the second reservation request information.

Further, the reservation server 300 transmits the first waiting number issuing result according to the waiting number issuing function to the second customer terminal and the second company terminal, respectively. In this case, the first waiting number issuing result includes ABCD restaurant, location information, phone number, company-specific code ABA98765, waiting number information (for example, No. 55), remaining order information (for example, 15 people/team), waiting number issuing date and time information (for example, October 27, 2018, 11:01 a.m.), and the like. As another example, as a result of the confirmation, when the corresponding ABCD restaurant does not provide a reservation function, the reservation server 300 links to a second company terminal related to the corresponding ABCD restaurant to perform a waiting number issuing function at 1:40 p.m. close to the reservation desired date and time information (for example, October 27, 2018, 2:00 p.m.) in the second reservation request information according to the waiting number that changes in real-time-based on the second reservation request information so as to use the corresponding ABCD restaurant in a time slot close to the desired reservation date and time (for example, October 27, 2018, 2:00 p.m.) in the second reservation request information.

Further, the reservation server 300 transmits the second waiting number issuing result according to the waiting number issuing function to the second customer terminal and the second company terminal, respectively. In this case, the second waiting number issuing result includes ABCD restaurant, location information, phone number, company-specific code ABA98765, waiting number information (for example, No. 378), remaining order information (for example, 20 people/team), waiting number issuing date and time information (for example, October 27, 2018 at 11:02 am), and the like (S270).

Thereafter, the customer terminal 100 receives the waiting number issuing result transmitted from the reservation server 300 in response to previously transmitted reservation request information, personal information, identification information of the customer terminal 100, and the like.

Further, the customer terminal 100 displays the transmitted waiting number issuing result.

Further, the company terminal 400 receives the waiting number issuing result transmitted from the reservation server 300 and displays (or stores/manages) the received waiting number issuing result.

For example, the second customer terminal receives the first waiting number issuing result transmitted from the reservation server 300 in response to previously transmitted second reservation request information, second personal information, and the like and displays the received first waiting number issuing result.

Further, the second company terminal receives the first waiting number issuing result transmitted from the reservation server 300 and displays the received first waiting number issuance result (S280).

Thereafter, the company terminal 400 determines whether the corresponding customer terminal 100 (or a user holding the customer terminal 100) enters the corresponding company at a specific reservation time (or according to the comparison between the waiting number that can be admitted in real-time and the waiting number information according to the waiting number issuing result) based on the reservation function performing result, the payment processing result, the waiting number issuing result, and the like.

In this case, to determine whether the corresponding customer terminal 100 has entered the company related to the corresponding company terminal 400, the company terminal 400 may determine whether the customer terminal 100 is located (or maintained) within a preset radius (for example, 50 meters) from the company terminal 400 (or corresponding company related to the corresponding company terminal 400) for more than a preset time (for example, 30 minutes) based on the corresponding specific reservation time.

In this case, the real-time location information of the customer terminal 100 may be confirmed through a location recognition sensor (for example, including aGPS sensor and the like) and the like provided in the customer terminal 100, or the communication connection state may be confirmed by a short-range communication method.

Further, in the case of a performance such as a concert or a movie, in order to determine whether the corresponding customer terminal 100 has entered the company (or performance venue) related to the corresponding company terminal 400, the company terminal 400 may determine whether the corresponding customer terminal 100 is located (or maintained) within a preset radius (for example, 50 meters) from the corresponding company terminal 400 (or corresponding company/performancevenue related to the corresponding company terminal 400) at a preset ratio (for example, 50%) or more during the corresponding performance time-based on the performance time related to the corresponding specific reservation time.

For example, the first company terminal determines whetherornotthe location of the user who holds the first customer terminal is maintained for one hour or more during the performance time within a set radius (for example, 50 meters) from Jamsil Olympic Stadium,whichis the corresponding concert venue from 7:00 p.m. to 9:00 p.m. on October 27, 2018, when the2018fall concert is held,andbasedonthis result,itis determined whether or not the user entered the concert hall.

As another example, thesecondcompanyterminalchecks whether or not the second customer terminal is included among at least one terminal connected to the second company terminal through short-range wireless communication at the time when the waiting numberNo. 55 may enter according to thewaiting number available for admission processed in real-time and the waiting number issued earlier (or checking whether the second company terminal and the second customer terminal are connected through short-range wireless communication),and basedonthis result,itis determined whether or not the user holding the second customer terminal issued with the waiting numberNo. 55 has entered the corresponding ABCD restaurant (S290).

As a result of the determination, when the customer terminal 100 (or the user holding the customer terminal 100) is not confirmed as entering the corresponding company at the specific reservation time (or according to the comparison between the waiting number that can be admitted in real-time and the waiting number information according to the waiting numberissuingresult),thecompany terminal 400 provides the SNS server 200 with information on the company'snon-entrance status for the corresponding customer terminal 100.

Further, the SNS server 200 receives information on the company non-entrance status of the corresponding customer terminal 100 provided by the company terminal 400.

For example, as a result of the determination,when the location of the user who holds the first customer terminal is not maintained for one hour or more during the performance time within a set radius (for example, 50 meters) from Jamsil Olympic Stadium,whichis the corresponding concert venue from 7:00 p.m. to 9:00 p.m. on October 27, 2018, when the2018fall concert is held,andbasedonthis result,itis determined whether or not the user entered the concert hall,the first company terminal determines that the user of the first customer terminal has not entered the corresponding2018 fall concert,andinformation on non-entrance of the 2018 fall concert of the first customer terminal is provided to the SNS server 200.

As another example, as a result of the determination, when the location of the second customer terminal issued with the waiting number No. 55 is not located within a preset radius from the corresponding ABCD restaurant at the time when the waiting number No. 55 is available for entrance (or when the short-range communication connection between the second company terminal and the second customer terminal is not maintained at the time when the waiting number No. 55 is available for entrance),the second company terminal determines that the user of the second customer terminal has not entered the ABCD restaurant, and information on non-entrance of the ABCD restaurant of the second customer terminal is provided to the SNS server 200 (S300).

Further, as a result of the determination, when the customer terminal 100 (or a user holding the customer terminal 100) is confirmed to have entered the company at the specific reservation time (or according to the comparison between the waiting number that can be admitted in real-time and the waiting number information according to the waiting number issuingresult),thecompany terminal 400 provides information on the company entrance completion status (or information on the completion status of the entrance of the company) of the corresponding customer terminal 100 to the SNS server 200.

Forexample, as a result of the determination, when the location of the user who holds the first customer terminal is maintained for one hour or more during the performance time within a set radius (for example, 50 meters) from Jamsil Olympic Stadium,whichis the corresponding concert venue from 7:00 p.m. to 9:00 p.m. on October 27, 2018, when the2018fall concert is held,the first company terminal determines that the user of the corresponding first customer terminal entered the corresponding2018fall concert and providesinformation on the entrance completion status of the 2018 fall concert of the first customer terminal to the SNS server 200.

Asanother example, as a result of the determination, when the second customer terminal issued with the waiting number No. 55 is located within a preset radius from the corresponding ABCD restaurant located at the timewhen the waiting number No. 55 mayenter(or when the short-range communication between the second company terminal and the second customer terminal is connected (or maintained) at the time when the waiting number No. 55 mayenter),the second company terminal determines that the user of the corresponding second customer terminal has entered the ABCD restaurant andprovidesinformation on the entrance completion status the ABCD restaurant of the second customer terminal to the SNS server 200 (S310). Then, the SNS server 200 receives information on the completion status of the company entrance of the customer terminal 100 (or information on the company entrance completion status) provided from the company terminal 400.

Further,the SNS server 200 confirms the visit to the corresponding company from the corresponding customer terminal 100 or processes the waiting number issued to the corresponding customer terminal 100 as being used,according to the reservation function performing result provided to the corresponding customer terminal 100 based on information on the completion status of the company entrance (or information on the company entrance completion status) of the customer terminal 100.

Further, the SNS server 200 transmits an evaluation request message for service satisfaction to the customer terminal 100 after a preset time (forexample, 2 hours) has elapsed.

Further, the SNS server 200 receives a response message corresponding to the evaluation request message transmitted from the customer terminal 100 and updates evaluation information for the corresponding company based on the response message. Inthiscase, the SNS server 200 provides a preset compensation (or reward) function such as cash, virtual currency, points, andthelike to the customer terminal 100 that transmits the response message.

For example, the SNS server 200 receives information on the entrance completion status of the 2018fall concert fromthe first customer terminal provided by the first company terminal.

Further, the SNS server 200 confirms that the first customer terminal has entered the corresponding concert based on the received information on the entrance completion status of the first customer terminal to the 2018fall concert, and after the corresponding concert ends, the SNS server 200 transmits a first evaluation request message forthe service satisfaction ofthe first customer terminal.

Further, the SNS server 200 receives thefirst response information transmitted from the first customer terminal in response to the previously transmitted first evaluation request message and updates evaluation information on XYZ public relations agency, which hosted the corresponding2018fall concert based on the received first response information.

Further, the SNS server 200 provides a preset Bitcoin of 0.0001 to the first customer terminal that provides the first response information.

As another example, the SNS server 200 receives information on the ABCD restaurant entrance completion status of the second customer terminal provided by the second company terminal.

Further, the SNS server 200 confirms that the second customer terminal has entered the ABCE restaurant based on the received information on the entrance completion status of the second customer terminal to the ABCDrestaurant, and after preset 3 hours lapse, the SNS server 200 transmits a second evaluation request message forthe service satisfaction to the second customer terminal.

Further, the SNS server 200 receives thesecond response information transmitted from the second customer terminal in response to the previously transmitted second evaluation request message and updates evaluation information on theABCD restaurant based on the received second response information.

Further, the SNS server 200 provides a preset discount coupon (for example, a 10% discount coupon for all menus within the 2018 period) to the second customer terminal that provided the second response information (S320).

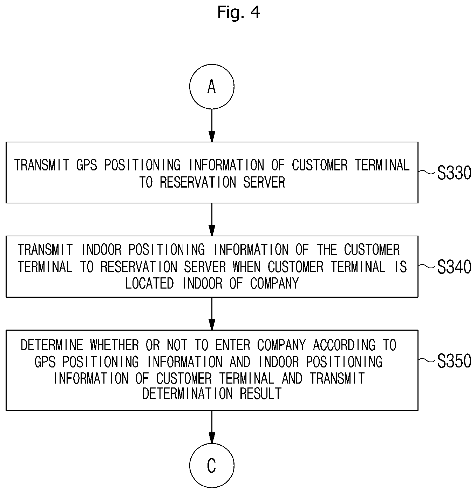

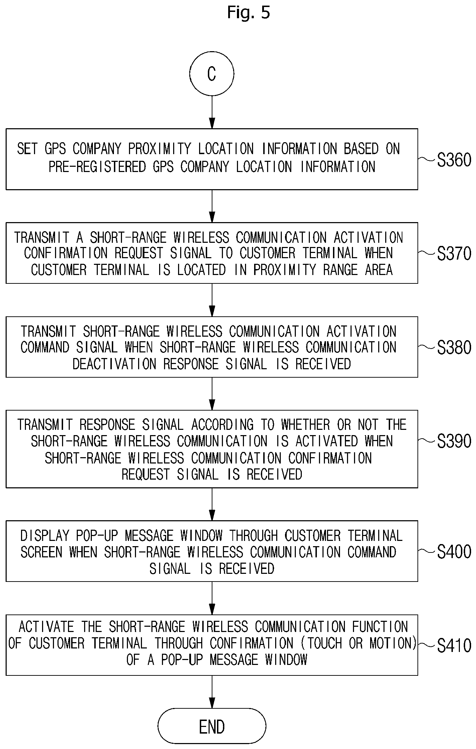

As described above, in the embodiment of the present invention, when any one of a specific text and a specific image displayed while using the SNS is selected,itismoved to the reservation page corresponding to any one of the selected specific text and specific image, or the reservation application installed on the terminal isrun to display the corresponding reservation screen, the personal information pre-stored in the terminal isusedto perform the reservation function or the waiting number providing function,sothatcompanies that provide reservation-related services can reduce the burden of publicity andreduce confusion in the field,customers, not companies or other advertisers, can search for information and make reservations, so reservations and payments can be made according to the customer's preference,part of the payment amount is compensated as advertising fee to SNS users, so that they can be used like cash,andaccordingly, the satisfaction of SNS users can be increased. Referring to FIGS. 4 and 5,the method for checking whether a customer enters or does not enter a companyaccording to an embodiment of the present invention may comprise at least one step of transmitting GPS positioning information of a customer terminal to a reservation server (S330), transmitting the indoor positioning information to the reservation serverwhen the customer terminal is located indoorof the company (S340), determining whether or not to enter the company according to the GPS positioning information and the indoor positioning information of the customer terminal and transmitting the result (S350), setting GPS company proximity location information based on the pre-registered GPS company location information (S360), transmitting a short-range wireless communication activation confirmation request signal to the customer terminal when the customer terminal is located in the proximity range area (S370),transmitting theshort-range wireless communication activation command signal when theshort-range wireless communication deactivation response signalisreceived (S380), transmitting a response signal according to whether or not the short-range wireless communication is activated when theshort-range wireless communication confirmation request signalisreceived (S390), displaying pop-up message window through a customer terminal screen when theshort-range wireless communication command signalisreceived(S400) and activating theshort-range wireless communication function of the customer terminal through confirmation of a pop-up message window (touchor movement) (S410).

In S330 of transmitting the GPS positioning information of the customer terminal to the reservation server, as shown in FIG. 11, the GPS positioning information of the customer terminal 100 obtained using the GPS function of the customer terminal 100 may be transmitted to the reservation server 300. The customer terminal 100 transmits the GPS positioning information to the reservation server 300 from the outside of the companybefore the customer enters the indoor of the companyto deliver the customer's location and the non-entrance status to the company according to the location.

InS340of transmitting the indoor positioning information to the reservation server when the customer terminal is located indoorsof the company, when the customer terminal 100 is located indoor of the company, a short-range wireless sensor network with the customer terminal 100 maybe formed through the indoor wireless positioning sensor module 600 installed in the indoors of the companytoobtaintheindoor positioning information of the customer terminal 100,therebytransmitting app key information of the corresponding customer terminal 100 together with the obtained indoor positioning information of the customer terminal 100 to the reservation server 300. Inthiscase, the indoor wireless positioning sensor module 600 is configured in the form of a modular sensor installedindoorofthe company,andfor example,it is configured in a form installed in a kiosk, POS terminal, andthelike. When the customer terminal 100 is located indoor of the company reserved by the customer, a short-range wireless sensor network with the customer terminal 100 maybe formed totransmitindoor positioning information of the indoor wireless positioning sensor module 600 and the customer terminal 100 to the reservation server 300. The indoor positioning information of the customer terminal 100 may be obtained using the indoor wireless positioning sensor module 600 equipped with functions such as Wi-Fi, Bluetooth (or beacon), and the like.Inthiscase, each customer terminal 100 is identified using the app key (unique number of the customer terminal 100) registered by the customer terminal 100 in the reservation server 300 when making a reservation for the company, and indoor positioning information of the identified customer terminal 100 may be obtained and transmitted to the reservation server 300.

InS350of determining whether or not to enter the company according to the GPS positioning information and the indoor positioning information of the customer terminal and transmitting the result,as shown in FIG. 11, whether or not the customer enters the company may be determined according to the GPS positioning information and the indoor positioning information of the customer terminal 100 to transmit theresult to the customer terminal 100 and the company terminal 400, respectively. To this end,S350of determining whether or not to enter the company according to the GPS positioning information and the indoor positioning information of the customer terminal and transmitting the result maycompriseS351of determining the non-entrance status to the company and transmitting the non-entrance result when only the GPS positioning information of the customer terminal is received andS352ofdetermining the companyentrancestatus of the company and transmitting the entranceresult,when the indoor positioning information of the customer terminal is received.

InS351of determining the non-entrance status to the company and transmitting the non-entrance result when only the GPS positioning information of the customer terminal is received,as shown in FIG. 11, when only the GPS positioning information of the customer terminal 100 is received, it is determined that the customer terminal 100 has not entered the corresponding company, and the result of the customer's non-entrance to the company may be transmitted to the customer terminal 100 and the company terminal 400, respectively. The GPS positioning information of the customer terminal 100 is location information that the customer terminal 100 can obtain from the outdoors of the company,and the indoor positioning information is location information that may be obtained when the customer terminal 100 is located indoors of the company as described above.Accordingly,the reservation server 300 may determine that the customer terminal 100 is not entering the company when only the GPS positioning information of the customer terminal 100 is received (when there is no indoor positioning information), andaccordingly, the determination result, that is, the customer'scompanynon-entrance result may be transmitted to the customer terminal 100 and the company terminal 400, respectively. The transmitted companynon-entrance result may be displayed on the screens of the customer terminal 100 and the company terminal 400.

InS352of determining the companyentrancestatus of the company and transmitting the entrance result,when the indoor positioning information of the customer terminal is received, it is determined that the customer terminal 100 has entered the corresponding company, and the result of the customer's entrance to the company may be transmitted to the customer terminal 100 and the company terminal 400, respectively. When the reservation server 300 receives location information including indoor positioning information of the customer terminal 100 (generally, it is difficult to obtain GPS information when the terminal is located indoors),itmay be determined that the customer terminal 100 has entered indoorof the company,andaccordingly, the determination result, that is, the customer'scompanyentrance result may be transmitted to the customer terminal 100 and the company terminal 400, respectively.Inthisway,thetransmitted company entrance result may be displayed through the screens of the customer terminal 100 and the company terminal 400 and may be provided in a separate notification message method.

InS360ofsetting GPS company proximity location information based on the pre-registered GPS company location information,when the company information isregistered, GPS company location information for each company, that is, GPS location information of the company is registered for each company through the company terminal 400, and eachofthe company proximity location information may be set for the proximity range area defined within a certain radius from the corresponding company based on the GPS location information of the registered company.

InS370of transmitting a short-range wireless communication activation confirmation request signal to the customer terminal when the customer terminal is located in the proximity range area,as shown in FIG. 12, when it is determined that the GPS positioning information of the customer terminal 100 is located in the proximity range area set as the GPS company proximity location information, the reservation server 300 mayshort-range wireless communicationactivation confirmation request signal to the customer terminal 100.

InS380oftransmitting theshort-range wireless communication activation command signal when theshort-range wireless communication deactivation response signal isreceived,as shown in FIG. 12, when the reservation server 300 receives the short-range wireless communication deactivation response signal to the short-range wireless communication activation confirmation request signal from the customer terminal 100,it may transmit a short-range wireless communication activation command signal to the customer terminal 100.

InS390oftransmitting a response signal according to whether or not the short-range wireless communication is activated when theshort-range wireless communication confirmation request signal isreceived,as shown in FIG. 12, when the customer terminal 100 receives a short-range wireless communication activation confirmation request signal from the reservation server 300, itchecks whether the short-range wireless communication function of the customer terminal 100 is activated. When the short-range wireless communication function is activated, a short-range wireless communication activation response signal is transmitted to the reservation server,andwhen the short-range wireless communication function is deactivated, a short-range wireless communication deactivation response signal maybe transmitted to the reservation server 300 totransmit information on whether the short-range wireless communication function of the customer terminal 100 is activated to the reservation server 300.

InS400ofdisplayinga pop-up message window through a customer terminal screen when theshort-range wireless communication command signal isreceived,when the customer terminal 100 receives a short-range wireless communication activation command signal from the reservation server 300, the customer terminal 100 may display a short-range wireless communication activation pop-up message window through the screen of the customer terminal to guide the short-range wireless communication function of the customer terminal 100 to be activated. InS410ofactivating theshort-range wireless communication function of the customer terminal through theconfirmation of a pop-up message window (touch or movement),when the customer terminal 100 checks the short-range wireless communication activation pop-up message window through a screen touch of the customer terminal 100,the short-range wireless communication function of the customer terminal is activated, or motion of a preset pattern with respect to the customer terminal 100is detected using the three-axis sensor configured in the customer terminal 100 totheactivateshort-range wireless communication function of the customer terminal 100.

For example, as shown in FIG. 13, when a user confirms a short-range wireless communication activation pop-up message window by touching the screen of the customer terminal 100, the short-range wireless communication function of the customer terminal 100 may be activated.Thatis,the customer terminal 100 may automatically activate a short-range wireless communication function such as Wi-Fi or Bluetooth bytouching (or clicking) the confirmation button of the pop-up message window.

Further, as shown in FIG. 14,the short-range wireless communication activation pop-up message window maydetect themotion of a preset pattern with respect to the customer terminal 100 using the three-axis sensor configured in the customer terminal 100toactivateashort-range wireless communication function of the customer terminal 100. For example, if the customer terminal 100 is shaken 3 times in the left-right direction or 2 times in the vertical direction, the customer terminal 100 may automatically activate a short-range wireless communication function such as Wi-Fi or Bluetooth.

In this way, when the customer terminal 100 is located near the company, itischecked whether a communication environment capable of obtaining indoor positioning information is set when the customer terminal 100 is located indoors of the company,andthenwhen it is not set, the corresponding communication environment is set more easily to determine whether the company has entered indoorofthecompany based on the indoor positioning information.

The foregoing may be modified and modified by those skilled in the art without departing from the essential characteristics of the present invention. Therefore, the embodiments disclosed in the present invention are not intended to limit the technical spirit of the present invention, but to explain thesame, and the scope of the technical spirit of the present invention is not limited by these embodiments. The protection scope of the present invention should be construed by the following claims,andall technical ideas within the equivalent range should be construed as being included in the scope of the present invention.

### [Description of reference numbers]

10: reservation and payment system
100: customer terminal
200: SNS server
300: reservation server
400: company terminal
500: payment server
600: indoor wireless positioning sensor module

## Claims

1. A reservation and payment system using social network services (SNS), the system comprising:
a company terminal associated with a company providing a service related to a specific word or a specific image;
a SNS server providing information including the specific word or specific image;
a customer server, when a preset specific word or specific image is selected from information displayed on a customer terminal while connected to an SNS account related to the customer terminal, displaying a reservation screen for using a service provided by the company related to the selected specific word or specific image bylinkingtothe SNS server and reservation server, transmitting reservation request information including a plurality of input values corresponding to a plurality of input items included in the reservation screen, personal information related to the user of the customer terminal pre-stored in the customer terminal, and identification information of the customer terminal to the reservation server, displaying the waiting number issuing result transmitted in response to the reservation request information, transmitting positioning information of global positioning system (GPS) of the customer terminal obtained using GPS function, and receiving and displaying a result of whether or not to enter the company from the reservation server;
an indoor wireless positioning sensor module being installed in the company's room and when the customer terminal is located in the company's room, forming a short-range wireless sensor network with the customer terminal to transmitindoor positioning information of the customer terminal to the reservation server; and
the reservation server performing a waiting number issuing function based on the current time-based on the reservation request information by linking tothe company terminal related to the reservation request information, transmitting the waiting number issuing result to the customer terminal and the company terminal, respectively, transmitting the result by determining whether or not the customer entered the company according to the GPS positioning information and indoor positioning information of the customer terminal to the customer terminal and the company terminal, respectively.

2. The reservation and payment system using SNS of claim 1, wherein the reservation screen includes information for reserving a service provided by the company related to the specific word or image and includes at least one selection item of information about the company related to the specific word or image, information about business hours, price information and discount information for each provided service, and a reservation date and time.

3. The reservation and payment system using SNS of claim 1, wherein the reservation request information includes at least one of reservation company information, desired date and time of reservation information, reservation service information, information on the number of people to be reserved, and other request information.

4. The reservation and payment system using SNS of claim 1, wherein the waiting number issuing result includes waiting number information, remaining order information, and waiting number issuing date and time information issued according to the order of issuing waiting numbers from a waiting number issuing device provided in the company and linked to the company terminal, and information about a company related to the company terminal.

5. The reservation and payment system using SNS ofclaim1, wherein the reservation server links to the company terminal and the waiting number issuing device linking to the company terminal and being provided in the company and performs the waiting number issuing function to use the service provided by the company within a preset time from the desired time of reservation included in the reservation request information based on the reservation request information and the real-time waiting number issued by the waiting number issuing device.

6. The reservation and payment system using SNS ofclaim1, wherein the reservation server, when only the GPS positioning information of the customer terminal is received, determines that the customer terminal has not entered the company and transmits the result of the customer's non-entrance to the company to the customer terminal and the company terminal, respectively, and the reservation server, when the location information including the indoor positioning information of the customer terminal is received, determines that the customer terminal is in an entrance state to the company and transmits the result of the customer's entrance to the company to the customer terminal and the company terminal, respectively.

7. The reservation and payment system using SNS ofclaim1, wherein the reservation server, when GPS company proximity location information for a proximity range area of a certain radius is set based on the GPS company location information registered for each company terminal, and it is determined that the GPS positioning information of the customer terminal is located in the proximity range area set as the GPS company proximity location information, transmits a short-distance wireless communication activation confirmation request signal to the customer terminal, and the reservation server, when a short-range wireless communication deactivation response signal to the short-range wireless communication activation confirmation request signal is received from the customer terminal, transmits a short-range wireless communication activation command signal to the customer terminal.

8. The reservation and payment system using SNS ofclaim7, wherein the customer terminal, when the short-range wireless communication activation confirmation request signal is received, checks whether the short-range wireless communication function is activated in the customer terminal,
wherein the customer terminal, when the short-range wireless communication function is activated, transmits a short-range wireless communication activation response signal to the reservation server, or the customer terminal, when the short-range wireless communication function is deactivated, transmits a short-range wireless communicationdeactivation response signal to the reservation server, and wherein the customer terminal, when the short-range wireless communication activation command signal is received from the reservation server, displays a short-range wireless communication activation pop-up message window through the screen of the customer terminal.

9. The reservation and payment system using SNS ofclaim 8, wherein the short-range wireless communication activation pop-up message window, when the user confirms by touching the screen of the customer terminal, activates the short-range wireless communication function of the customer terminal or when detecting motion of a preset pattern with respect to the customer terminal using the three-axis sensor configured in the customer terminal.

10. A reservation and payment method using SNS, the method comprising:
displaying, by a customer server, when a preset specific word or specific image is selected from information displayed on a customer terminal while connected to an SNS account related to the customer terminal, a reservation screen for using a service provided by a company related to the selected specific word or specific image bylinkingtothe SNS server and reservation server;
transmitting, by the customer server, reservation request information including a plurality of input values corresponding to a plurality of input items included in the reservation screen, personal information related to the user of the customer terminal pre-stored in the customer terminal, and identification information of the customer terminal to the reservation server;
performing, by the reservation server, a waiting number issuing function based on the current time-based on the reservation request information bylinkingtothe company terminal related to the reservation request information;
transmitting, by the reservation server, the waiting number issuing result to the customer terminal and the company terminal, respectively;
displaying, by the customer terminal,the waiting number issuingresult transmitted from the reservation server in response to the transmitted reservation request information;
transmitting the GPS positioning information of the customer terminal obtained using the GPS function of the customer terminal to the reservation server;
forming, when the customer terminal is located indoors of the company, a short-range wireless sensor network with the customer terminal through an indoor wireless positioning sensor module installed indoor of the company to transmit indoor positioning information of the customer terminal to the reservation server; and transmitting, by the reservation server, the result by determining whether or not the customer entered the company according to the GPS positioning information and indoor positioning information of the customer terminal to the customer terminal and the company terminal, respectively.

11. The reservation and payment method using SNS of claim 10, the method further comprising:
performing, by the reservation server, when a company related to the reservation request information provides a reservation function, the reservation function bylinkingtothe company terminal related to the company based on the reservation request information;
transmitting, by the reservation server, a result of performing the reservation function to the customer terminal and the company terminal related to the company, respectively;
receiving, by the customer terminal, the result of performing the reservation function transmitted from the reservation server in response to the transmitted reservation request information and displaying the received result of performing the reservation function;
prepayment processing, by the customer terminal, a payment for using a service provided by the company according to a user's selection bylinkingtothe SNS server, the reservation server, the company terminal, and a payment server;
providing, by the company terminal, a preset part of the payment amount in the form of an advertisement fee to the customer terminal; and
displaying, by the customer terminal, information on the payment processing result and advertising fee provided from the company terminal.

12. The reservation and payment method using SNS of claim 10, the method further comprising:
determining, by the company terminal, whether to enter the company for the customer terminal based on the waiting number issuing result;
providing, by the company terminal, when the non-entrance status of the customer terminal to the company is confirmed by a result of the determination, information on the non-entrance status of the customer terminal to the SNS server;
providing, by the company terminal, when the entrance status of the customer terminal to the company is confirmed by a result of the determination, information on the entrance completion status of the customer terminal to the SNS server;
processing, by the SNS server, the waiting number issued to the customer terminal as being used based on the information on the company entrance completion status of the customer terminal;
transmitting, by the SNS server, an evaluation request message for service satisfaction to the customer terminal;
updating, by the SNS server, evaluation information on the company based on a response message transmitted from the customer terminal in response to the transmitted evaluation request message; and
providing, by the SNS server, a preset compensation function to the customer terminal that transmits the response message.

13. The reservation and payment method using SNS of claim 10, wherein the step of transmitting, by the reservation server, the result by determining whether or not the customer entered the company according to the GPS positioning information and indoor positioning information of the customer terminal to the customer terminal and the company terminal, respectively comprises: determining, when only the GPS positioning information of the customer terminal is received, that the customer terminal has not entered the company to transmit the result of the customer's non-entrance to the company to the customer terminal and the company terminal, respectively, and determining, when the location information including the indoor positioning information of the customer terminal is received, that the customer terminal has entered the company to transmit the result of the customer's entrance to the company to the customer terminal and the company terminal, respectively.

14. The reservation and payment method using SNS of claim 10, the method further comprising:
setting, by the reservation server, GPS company proximity location information for a proximity range area of a certain radius based on the GPS company location information registered for each company terminal;
transmitting, by the reservation server, when it is determined that the GPS positioning information of the customer terminal is located in the proximity range area set as the GPS company proximity location information, a short-distance wireless communication activation confirmation request signal to the customer terminal; and
transmitting, when a short-range wireless communication deactivation response signal in response to the short-range wireless communication activation confirmation request signal is received from the customer terminal, a short-range wireless communication activation command signal to the customer terminal.

15. The reservation and payment method using SNS of claim 14, the method further comprising:
checking, when the customer terminal receives the short-range wireless communication activation confirmation request signal from the reservation server, whether the short-range wireless communication function is activated in the customer terminal and transmitting, when the short-range wireless communication function is activated, a short-range wireless communication activation response signal to the reservation server, or transmitting, when the short-range wireless communication function is deactivated, a short-range wireless communication deactivation response signal to the reservation server; and
displaying, when the short-range wireless communication activation command signal is received from the reservation server, a short-range wireless communication activation pop-up message window through the screen of the customer terminal.

16. The reservation and payment method using SNS of claim 15, the method further comprising:
activating, when the customer terminal confirms the short-range wireless communication activation pop-up message window by touching the screen of the customer terminal, the short-range wireless communication function of the customer terminal, or
activating, when detecting motion of a preset pattern with respect to the customer terminal using the three-axis sensor configured in the customer terminal, the short-range wireless communication function of the customer terminal.
